# EUROPÄISCHE PATENTSCHRIFT

(11) **EP 1 226 486 B1**
(45) Veröffentlichungstag und Bekanntmachung des Hinweises auf die Patenterteilung: **28.05.2003**
(21) Anmeldenummer: 00982971.4
(22) Anmeldetag: 07.10.2000
(51) Int. Cl.: G06F 3/00

(54) **VORRICHTUNG ZUR DARSTELLUNG VON INFORMATIONEN IN EINEM FAHRZEUG**
DEVICE FOR REPRESENTING INFORMATION IN A MOTOR VEHICLE
DISPOSITIF DE PRESENTATION D'INFORMATIONS DANS UN VEHICULE

(30) Priorität: 22.10.1999 DE 19951001
(43) Veröffentlichungstag der Anmeldung: 31.07.2002
(73) Patentinhaber: ROBERT BOSCH GMBH, 70442 Stuttgart (DE)
(72) Erfinder: ENGELSBERG, Andreas, 31141 Hildesheim (DE); BAUER, Sven, 31134 Hildesheim (DE); SCHMALE, Bernd, 31139 Hildesheim (DE); KUSSMANN, Holger, 31180 Giessen (DE)
(86) Internationale Anmeldenummer: DE0003532
(87) Internationale Veröffentlichungsnummer: WO01029640

(56) Entgegenhaltungen:
- DE-A- 19 807 065
- US-A- 4 973 149

## Beschreibung

### Stand der Technik

Die Erfindung geht aus von einer Vorrichtung zur Darstellung von Informationen in einem Fahrzeug nach der Gattung des unabhängigen Patentanspruchs.

In einem Kraftfahrzeug werden bereits verschiedene Informationen aus verschiedenen Informationsquellen dem Fahrer angezeigt. Es wird meist für jede Informationsquelle eine unterschiedliche Anzeige verwendet. Der Fahrer richtet seinen Blick auf diese unterschiedlichen Anzeigen, um die entsprechenden Informationen aufzunehmen.

In der Offenlegungsschrift DE 198 07 065 A1 wird ein Verfahren zur Steuerung von Funktionen mobiler Systeme vorgeschlagen, bei dem mittels einer optoelektronischen Brille vom Netzhautreflexbild des Auges gewonnene Bildinformation mit einem Rechner ausgewertet und zur Gewinnung von Steuersignalen verwendet werden.

### Vorteile der Erfindung

Die erfindungsgemäße Vorrichtung mit den Merkmalen des unabhängigen Patentanspruchs hat demgegenüber den Vorteil, dass eine Informationszuführung auf die Fahrertätigkeit abgestimmt wird. Die Blickrichtung des Fahrers bestimmt, wo die Informationen eingeblendet werden. Daher wird vorteilhafterweise der Fahrer nicht genötigt, auf Anzeigen
zu blicken, um Informationen aufzunehmen, sondern seine Blickrichtung bestimmt, wo die Informationen eingeblendet werden. Dadurch wird die Sicherheit des Fahrers und der anderen Verkehrsteilnehmer entscheidend erhöht.

Durch die in den abhängigen Ansprüchen aufgeführten Maßnahmen sind vorteilhafte Weiterbildungen und Verbesserungen der im unabhängigen Anspruch angegebenen Vorrichtung möglich.

Besonders vorteilhaft ist, daß in einer Weiterbildung der erfindungsgemäßen Vorrichtung die Informationen in die Windschutzscheibe eingeblendet werden, da die Windschutzscheibe das hauptsächliche Blickfeld des Fahrers ausmacht. Dadurch wird die Integration eines zusätzlichen Bildschirms für die Anzeige der Informationen in dem Fahrzeug überflüssig gemacht, so daß Platz im Fahrzeug eingespart wird.

Weiterhin ist von Vorteil, daß in einer Weiterbildung der Erfindung die Informationen mittels einer Projektion direkt auf die Netzhaut des Fahrers eingeblendet werden. Dadurch wird eine dreidimensionale Darstellung möglich und auch der Verzicht auf eine Projektionsfläche. Diese Weiterbildung macht die Darstellung der Informationen unabhängig von dem Aufbau des Fahrzeugs.

Darüber hinaus ist es von Vorteil, daß erfindungsgemäß die Informationen auf einer Anzeige dargestellt werden, die die Informationen dreidimensional erscheinen läßt. Dadurch wird eine natürliche Darstellung der Informationen z.B. bei einem Navigationsgerät ermöglicht. Abhängig von der Situation kann vorteilhafterweise zwischen einer zweidimensionalen und dreidimensionalen Darstellung gewählt werden.

Des weiteren ist es von Vorteil, daß eine Kombination von verschiedenen Mitteln zur Darstellung eingesetzt wird, die jeweils je nach Blickrichtung des Fahrers verwendet werden.

Darüber hinaus ist es von Vorteil, daß die erfindungsgemäße Vorrichtung mit einem Navigationsgerät verbunden ist, so daß der Ort des Fahrzeugs und die Streckenführung dem Fahrer eingeblendet und auch weitere, alternative Streckenführungen eingeblendet werden. Ebenso können für die Streckenführung wesentliche Dinge im Sichtfeld des Fahrers farblich hervorgehoben werden.

Weiterhin ist es von Vorteil, daß die erfindungsgemäße Vorrichtung eine Kamera aufweist, die eine Szene hinter dem Fahrzeug aufnimmt, so daß eine Rückspiegelfunktion erreicht wird. Dies erhöht den sicherheitstechnischen Aspekt der Erfindung.

In einer Weiterbildung der Erfindung weist die erfindungsgemäße Vorrichtung einen Speicher auf, der eine Bedienungsanleitung, eine Benutzerführung und eine Hilfefunktion aufweist, die von dem Fahrer benutzt werden können, um die Benutzung seines Fahrzeugs und der darin befindlichen Geräte zu erleichtern.

Weiterhin ist von Vorteil, daß mittels einer Sende/Empfangsstation Daten von externen Datenquellen abgerufen werden können und empfangen werden. Dadurch ist es dem Fahrer möglich, beliebige Datenquellen von außen anzuzapfen, um alle möglichen Informationen abzurufen.

Darüber hinaus ist es von Vorteil, daß die erfindungsgemäße Vorrichtung mit einer Empfangsstation verbunden ist, die sowohl den Empfang von Daten und Audioprogrammen ermöglicht:. Dadurch ist es möglich, Informationen, die über Digitalfunk gesendet werden, insbesondere Multimedia-Daten zu empfangen und für den Fahrer darzustellen.

Darüber hinaus ist es von Vorteil, daß der Fahrer durch eine Veränderung seiner Blickrichtung und/oder Spracheingaben Geräte und/oder Funktionen, die dargestellt werden, auszuführen. Diese Weiterbildung erhöht weiterhin die Sicherheit des Fahrers, da er seine Hände zur Kontrolle des Fahrzeugs weiterhin verwenden kann.

Des weiteren ist es von Vorteil, daß die erfindungsgemäße Vorrichtung mit Fahrzeugsensoren verbunden ist, so daß fahrzeugkritische Werte dem Fahrer bei Unterschreiten oder Überschreiten dieser Werte eingeblendet werden, so daß der Fahrer entsprechende Maßnahmen treffen kann.

In einer Weiterbildung der Erfindung ist es vorgesehen, daß die Blickrichtung des Fahrers mittels reflektiertem Infrarotlicht gemessen wird. Diese Weiterbildung ermöglicht auch die Detektion der Blickrichtung des Fahrers bei Nacht.

Darüber hinaus ist es von Vorteil, daß in Abhängigkeit von der Blickrichtung und Kopfhöhe des Fahrers die Rückspiegel und die Kopfstützenhöhe mittels einer Aktorik eingestellt werden. Dadurch wird ein erhöhtes Maß an Fahrsicherheit und Fahrkomfort erzielt.

Es ist weiterhin von Vorteil, daß Komponenten der Vorrichtung und mit der Vorrichtung verbundene Komponenten über einen Bus verbunden sind. Dies vereinfacht und verbilligt daher den Aufbau der erfindungsgemäßen Vorrichtung.

### Zeichnung

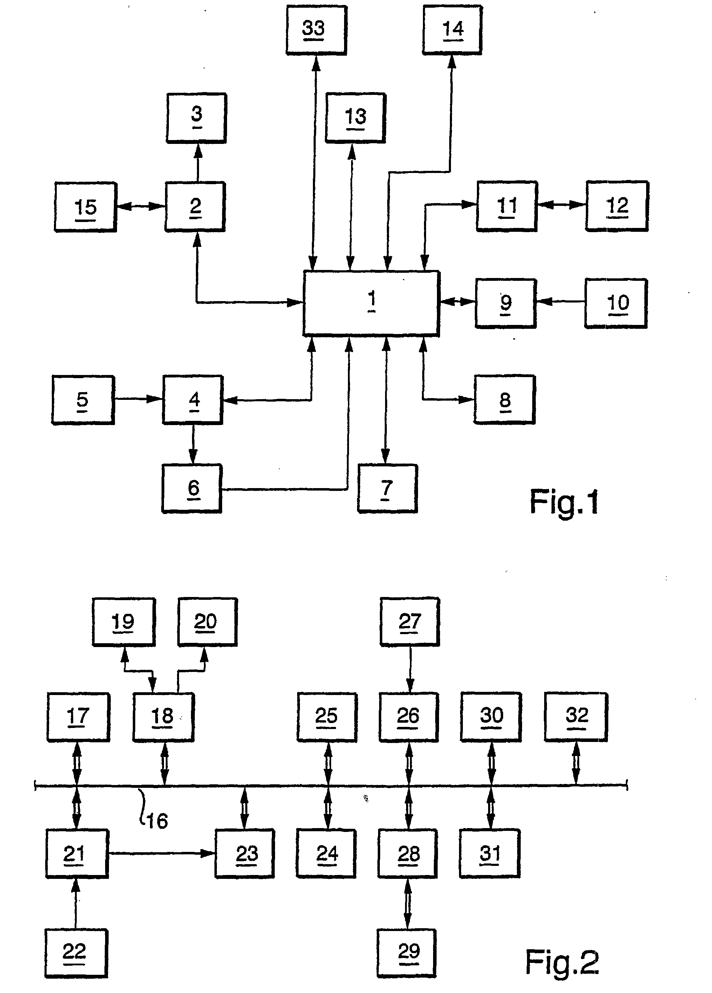

Ausführungsbeispiele der Erfindung sind in der Zeichnung dargestellt und in der nachfolgenden Beschreibung näher erläutert. Es zeigen Figur 1 ein Blockschaltbild einer erfindungsgemäßen Vorrichtung und Figur 2 ein Blosckschaltbild einer erfindungsgemäßen Vorrichtung, wobei die Geräte über einen Bus verbunden sind.

### Beschreibung der Ausführungsbeispiele

Durch die Integration von immer mehr Informationsquellen und Kommunikationsgeräten in einem Kraftfahrzeug wird der Fahrer mit einer schwer zu bewältigenden Informationsflut konfrontiert, die den Fahrer von seiner eigentlichen Fahrtätigkeit ablenkt. Verschiedene Quellen für Multimediadaten, eine Anbindung ans Internet, Fahrerinformationsquellen wie Navigationsgeräte oder eine Fahrerunterstützung überlasten und lenken den Fahrer ab. Es ist daher notwendig, die Sicherheit des Fahrers nicht durch diese Informationsquellen zu beeinträchtigen. Erfindungsgemäß wird daher eine Blickrichtung des Fahrers genutzt, um in die Blickrichtung des Fahrers die relevanten Informationen einzublenden. Der Fahrer richtet seinen Blick also primär auf den Verkehr, um sein Fahrzeug sicher zu führen. In sein Blickfeld werden dann die entsprechenden Informationen eingeblendet.

In Figur 1 ist ein Blockschaltbild einer erfindungsgemäßen Vorrichtung, die in einem Kraftfahrzeug eingebaut ist, dargestellt. Ein Rechner 1 ist mit allen angeschlossenen Geräten verbunden und verwaltet die ankommenden Daten, indem er diese Daten an entsprechende angeschlossene Geräte weiter sendet. Der Rechner 1 ist mit einer Signalverarbeitung 2 verbunden, wobei der Rechner 1 über seinen ersten Datenein/ausgang Daten zur Signalverarbeitung 2 überträgt, die dargestellt werden sollen, und von der Signalverarbeitung 2 Daten empfängt, die Ausführungsbefehle eines Fahrers beinhalten. Die Signalverarbeitung 2 ist über einen zweiten Datenein/-ausgang mit einer Kombination 15 aus einem Lautsprecher und einem Mikrofon und angeschlossener Elektronik verbunden. Das Mikrofon wandelt akustische Signale, das sind insbesondere Befehle des Fahrers, in elektrische Signale um, die die angeschlossene Elektronik verstärkt und digitalisiert, so daß die Signalverarbeitung 2 von der Kombination 15 einen digitalen Datenstrom erhält, der Ausführungsbefehle des Fahrers beinhaltet. Die Signalverarbeitung 2 weist Daten auf, um eine Spracherkennung durchzuführen. Ein dem Fahrer bekannter Befehlssatz ist als Datum in einem an die Signalverarbeitung 2 angeschlossenen Speicher abgelegt und wird zur Spracherkennung verwendet. Die Signalverarbeitung 2 leitet damit aus den Befehlen des Fahrers einfache, digital codierte Befehle ab. Diese Befehle überträgt die Signalverarbeitung 2 zu dem Rechner 1, so daß diese umgewandelten Befehle erkannt und ausgewertet werden, um eine entsprechende Aktion auszuführen.

Mittels des Lautsprechers der Kombination 15 werden elektrische Signale in akustische Signale umgewandelt. Diese elektrischen Signale werden von der Signalverarbeitung 2 zu der Kombination 15 übertragen. Sie beinhalten Informationen für den Fahrer, die von verschiedenen Datenquellen stammen, die an den Rechner 1 angeschlossen sind.

Die Signalverarbeitung 2 ist weiterhin über einen Datenausgang mit einer Anzeige 3 verbunden, die die von der Signalverarbeitung 2 kommenden Daten auf die Windschutzscheibe projiziert. Diese Anzeige 3 wird englisch mit Head-up-Display bezeichnet, wobei im Amaturenbrett ein Projektor eingebaut ist, der auf die Windschutzscheibe, die mit einer geeigneten Folie beschichtet ist, optische Informationen einblendet. Dabei werden Informationen wie die momentane Geschwindigkeit, die Kühlwassertemperatur und die Tankanzeige direkt eingeblendet. Weitere Informationen wie die eines Navigationsgerätes, ein Reifendruck, eine Aufnahme der rückwärtigen Szene des Fahrzeugs, eine Bedienungsanleitung, eine Benutzerführung und ein Hilfeassistent werden hier eingeblendet.

Der Fahrer ist in der Lage, einerseits durch Sprache oder seine Blickrichtung bestimmte Aktionen zu veranlassen. Die Spracherkennung wurde oben beschrieben, die Erkennung der Blickrichtung wird weiter unten dargelegt. Die Blickrichtung erlaubt die Führung eines Zeigers auf der Anzeige 3, so daß der Fahrer sieht, wie und wo er mit seiner Blickrichtung den Zeiger führt und insbesondere worauf der Blick im Moment gerichtet ist. Dabei werden hier Felder auf die Windschutzscheibe eingeblendet, die der Fahrer durch seine Blickrichtung aktiviert. Auf diesen Feldern steht, was sie bedeuten. Ein Feld ist mit Navigation bezeichnet. Indem der Fahrer seinen Blick auf dieses Feld richtet, wird es geöffnet. Durch weitere Eingaben, z.B. durch Sprache oder Auswahlmenüs nutzt er die Möglichkeiten des Navigationsgeräts, indem er einen Zielort eingibt und entsprechende Routen, auch Alternativen, zu diesem Zielort werden dann eingeblendet.

Ein weiteres Feld repräsentiert das Autoradio. Durch Aktivieren dieses Feldes schaltet der Fahrer das Radio ein und wählt Kanäle aus. Weiterhin ist es ihm möglich, einen Datenträger wie eine Musikkassette, eine Minidisk oder eine Compact-Disk abspielen zu lassen. Ein weiteres Feld steht für ein Mobiltelefon, also eine Sende/Empfangsstation. Durch Aktivieren dieses Feldes kann der Fahrer einen Anruf tätigen oder Daten mittels des Mobiltelefons abrufen, z.B. Internetseiten.

Durch Aktivieren eines weiteren Feldes wird es dem Fahrer ermöglicht, eine Bedienungsanleitung und/oder eine Benutzerführung und/oder eine Hilfefunktion abzurufen. Diese Daten sind in einem Speicher 12 enthalten und können auf Befehl des Fahrers abgerufen werden. Dabei ist eine akustische als auch optische Darstellung dieser Informationen möglich. Die Hilfefunktion bietet textuell ein Glossar, das eingeblendet wird, und/oder eine Dialogfunktion, wobei Antworten auf Fragen des Fahrers textuell und/oder akustisch gegeben werden.

Die Befehle des Fahrers, akustisch oder durch seine Blickrichtung, werden an den Rechner 1 übertragen, der dann die entsprechenden, angeschlossenen Geräte aktiviert. Die akustischen Befehle gelangen von der Signalverarbeitung 2 zu dem Rechner 1. Die Rechner 1 ist darüber informiert, auf welchem Teil der Windschutzscheibe die Anzeige stattfindet, so daß die Blickrichtung des Fahrers damit in bezug gebracht wird. Dies führt einerseits dazu, daß dem Fahrer mittels eines Zeigers angezeigt wird, auf welches Objekt der Anzeige er im Moment seinen Blick richtet, und andererseits welchen Befehl der Fahrer durch die Blickrichtung angibt.

Alternativ zu den Feldern können die Geräte und die Funktionen, die der Fahrer aktiviert, als Worte oder Bilder oder charakteristische Zeichen eingeblendet werden.

Anstatt eines Head-up-Displays sind weitere Projektionstechniken möglich. Eine solche Technik ist die Projektion der darzustellenden Daten direkt auf die Netzhaut durch einen Netzhautprojektor. Dabei wird ein elektronisch modulierter Lichtstrahl durch die Pupille auf die Netzhaut projeziert, wobei dieser Lichtstrahl die Lichtrezeptoren der Netzhaut stimuliert, so daß ein Bild auf der Netzhaut generiert wird. Eine Bildquelle liefert dabei die darzustellenden Daten an eine Lichtquelle, die entsprechend der Bilddaten moduliert wird. Diese Lichtquelle weist drei verschiedene Farben auf, rot, grün und blau, so daß die Informationen in den richtigen Farben durch eine entsprechende Mischung des Lichts dieser drei Lichtquellen dargestellt werden können. Dabei wird eine solch niedrige Leistung für das Licht verwendet, so daß die Netzhaut nicht geschädigt wird.

Das modulierte Licht wird durch einen Scanner über die Netzhaut gerastert. Dies muß entsprechend schnell geschehen, so daß die ganze Netzhaut aktiviert wird, wie es beim normalen Sehen auch geschieht. An den Scanner ist dann eine Optik angeschlossen, die den modulierten Lichtstrahl auf das Auge projiziert. Dieser Netzhautprojektor ist dann im Amaturenbrett befestigt, so daß der Fahrer entsprechend seiner Blickrichtung in seine Augen die Informationen projiziert bekommt.

Eine weitere Möglichkeit der optischen Darstellung bieten autostereoskopische Bildschirme. Autostereoskopische Bildschirme verwenden zwei Aufnahmen von einem Gegenstand um ihn darzustellen. Dabei werden diese Aufnahmen so dargestellt, daß die Augen eines Betrachters diese Aufnahmen getrennt sehen. Dies wird zum einen dadurch erreicht, daß dem Betrachter eine entsprechende Brille gegeben wird, die unterschiedliche Filter aufweist, so daß die beiden Augen unterschiedliche Dinge sehen.

Eine andere Technik, wobei der Betrachter keine Brille benötigt, versieht die Anzeige mit einem Linsenraster, die mit einem Detektor zur Erkennung der Stellung des Kopfes verbunden ist, so daß das Linsenraster so verändert wird, daß je nach Stellung des Kopfes des Betrachters die Augen des Betrachters jeweils getrennt das entsprechende Bild sehen, um einen räumlichen Eindruck von der Szene zu erhalten. Diese Möglichkeit der optischen Darstellung ist insbesondere in Kombination entweder mit einem Headup-Display oder mit einem Netzhautprojektor zu sehen, so daß auch andere Insassen des Fahrzeugs oder andere Informationen auf diesem autostereokopischen Bildschirm dargestellt werden.

Je nach Anwendung kann eine zweidimensionale und/oder dreidimensionale farbliche Darstellungsform eingesetzt werden, wobei auch unterschiedliche Anzeigen verwendet werden können. Im folgenden beschränkt sich die Beschreibung auf die Verwendung eines Headup-Displays.

Der Rechner 1 ist über einen zweiten Datenein/-ausgang mit einer Signalverarbeitung 4 verbunden, die seinerseits über einen Dateneingang mit einer Kamera 5 verbunden ist, wobei diese Kamera 5 sowohl einen Detektor als auch Infrarotdioden aufweist, mit denen die Augen des Fahrers beleuchtet werden, um mit dem Detektor die reflektierte Infrarotlichtleistung zu detektieren und um dieses Meßergebnis dann an die Signalverarbeitung 4 zu übertragen.

Die Signalverarbeitung 4 überträgt diese Daten an eine Blickrichtungsbestimmung 6, die einen Prozessor aufweist und einen Speicher, um aus den von der Signalverarbeitung 4 empfangenen Daten eine Blickrichtung des Fahrers zu berechnen. Diese Blickrichtung wird dann dem Rechner 1 übertragen, der der angeschlossenen Signalverarbeitung 2 dieses mitteilt, so daß die Anzeige 3 als Head-up-Display entsprechend der Blickrichtung des Fahrers eingestellt wird, so daß die Informationen nur in Blickrichtung des Fahrers dargestellt werden. Es wird also ein Teil der Windschutzscheibe, der sich in Blickrichtung des Fahrers befindet, für die Projektion verwendet.

Weiterhin weist die Blickrichtungsbestimmung 6 die Funktion auf, daß, wenn der Blick des Fahrers zu lange von der Straße abgewendet ist, ein Warnton oder eine entsprechende Warnmitteilung in akustischer und/oder optischer Form veranlaßt wird. In Abhängigkeit von der Geschwindigkeit des Fahrzeugs wird die Zeit, die eine Warnung aufgrund eines abgewendeten Blicks verursacht, adaptiv angepaßt.

Alternativ zur Bestimmung der Blickrichtung mittels eines Infrarotlichts, das insbesondere auch bei Dunkelheit funktioniert, kann die Blickrichtung mittels der Aufnahme der Pupille des Fahrers und der Reflex seiner Hornhaut und mittels Bildanalyse ermittelt werden.

Der Rechner 1 ist über einen dritten Datenein/-ausgang mit einer Sende-/Empfangsstation 7 verbunden. Die Sende/Empfangsstation 7 ist hier ein Mobiltelefon, das sowohl für Sprach- als auch Datensignale verwendet werden kann, so daß der Fahrer über akustische und/oder optische Befehle wie oben dargestellt, Daten mittels der Sende/Empfangsstation 7 abrufen kann. Über einen vierten Datenein/-ausgang ist der Rechner 1 mit einem Autoradio verbunden. Mittels eines Autoradios, das insbesondere für digitalen Hörfunk wie z.B. DAB (Digital Audio Broadcasting) geeignet ist können neben Hörfunkprogrammen, die mittels akustischer oder optischer Befehle des Fahrers ausgewählt werden wie oben dargestellt, auch Multimediadaten empfangen werden. Diese werden dann akustisch mit dem Lautsprecher der Kombination 15 und/oder optisch mit der Anzeige 3 dargestellt.

Der Rechner 1 ist weiterhin über einen fünften Datenein/ausgang mit einer Videoanalyse 9 als ein Prozessor verbunden, an die eine Rückspiegelkamera 10 angeschlossen ist. Die Rückspiegelkamera 10 ist in der Nähe des Hecks des Fahrzeugs angebracht, so daß eine Szene hinter dem Auto aufgenommen werden kann, um eine Rückspiegelfunktion zu ermöglichen. Die Videoanalyse 9 verarbeitet diese Daten und überträgt sie an den Rechner 1, der sie zur Signalverarbeitung 2 weiterleitet, damit diese Daten mittels der Anzeige 3 dargestellt werden.

Der Rechner 1 ist weiterhin über seinen sechsten Datenein/ausgang mit einem Prozessor 11 verbunden, an den über einen Datenein/-ausgang der Speicher 12 angeschlossen ist. In dem Speicher 12 sind Daten für die Benutzerführung, die Bedienungsanleitung und die Hilfefunktion enthalten. Weiterhin werden hier Daten, die mittels der Sende/Empfangsstation 7 bzw. des Autoradios 8 empfangen werden, zwischengespeichert. Bei Bedarf werden diese Daten abgerufen und entsprechend, wie oben dargestellt, auf der Anzeige 3 dargestellt.

Über einen siebten Datenein/-ausgang ist der Rechner 1 mit einem Navigationsgerät 14 verbunden, so daß die allgemein bekannten Funktionen eines Navigationsgerätes über den Rechner 1 und die Signalverarbeitung 2 auf der Anzeige 3 dargestellt werden, wenn es vom Fahrer gewünscht wird.

Über einen achten Datenein/-ausgang ist der Rechner 1 mit Fahrzeugsensoren 14 verbunden. Diese liefern Daten über den Reifendruck, die Kühlwassertemperatur oder den Tankfüllstand. Bei Unter- oder Überschreiten eines kritischen Werts werden diese Daten auf der Anzeige 3 eingeblendet. Die Schwellwerte sind in dem Speicher 12 enthalten, wobei aktuelle Messungen von den Fahrzeugsensoren 14 über den Rechner 1 an den Prozessor 11 weitergeleitet werden, so daß im Prozessor 11 ein Schwellwertvergleich durchgeführt wird.

Über einen neunten Datenein-/ausgang ist der Rechner 1 mit einer Aktorik 33 verbunden. Die Aktorik 33 steuert die Rückspiegel und die Kopfstütze des Fahrers. In Abhängigkeit von der Blickrichtung und Kopfhöhe des Fahrers, die auch mit der Blickrichtungsbestimmung 6 erkannt wird, übergibt der Rechner 1 der Aktorik entsprechende Daten, so daß die Rückspielgel und die Kopfstützenhöhe auf den Fahrer angepaßt werden.

In einer Weiterbildung der Erfindung sind die Komponenten der erfindungsgemäßen Vorrichtung über einen Bus verbunden. Das Blockschaltbild in Figur 2 zeigt die erfindungsgemäße Vorrichtung, wobei die Komponenten über einen Bus 16 verbunden sind. Die Komponenten, die direkt an den Bus 16 angeschlossen sind, weisen einen Baustein auf, der den Datentransfer über den Bus steuert. Ein den Bus 16 sind direkt ein Rechner 17, eine Signalverabeitung 18, eine Signalverabeitung 21, eine Blickrichtungserkennung 23, eine Sende-/Empfangsstation 24 als Mobiltelefon, eine Empfangsstation 25 als Autoradio, eine Videoanalyse 26, ein Anwendungsprozessor 28, Fahrzeugsensoren 30, eine Aktorik 32 und ein Navigationssystem 31 angeschlossen.

An die Signalverabeitung 18 ist über ein Datenein-/ausgang eine Kombination 19 aus Lautsprecher und Mikrofon und über einen Datenausgang eine Anzeige 3 angeschlossen. An die Signalverarbeitung 21 ist eine Kamera 22 angeschlossen. An die Videoanalyse 26 ist eine Kamera 27 angeschlossen und an den Anwendungsprozessor 28 ist ein Speicher 29 angeschlossen. Die Funktionsweise der einzelnen Elemente, das Zusammenspiel der Komponenten und die Alternativen entsprechen dem für Fig. 1 Gesagten.

## Patentansprüche

1. Vorrichtung zur Darstellung von Informationen in einem Fahrzeug, wobei die Vorrichtung Mittel (3, 15, 19, 20) zur optischen und/oder akustischen Darstellung aufweist, wobei die Mittel (3, 15, 19, 20) zur optischen und/oder akustischen Darstellung die Informationen darstellen, wobei verschiedene Datenquellen die Informationen bereitstellen, wobei die Vorrichtung Mittel (4, 5, 6, 21, 22, 23) zur Blickrichtungserkennung eines Fahrers des Fahrzeugs aufweist, wobei die Mittel (4, 5, 6, 21, 22, 23) zur Blickrichtungserkennung die Blickrichtung des Fahrers erkennen, wobei die Vorrichtung einen Rechner (1, 17) aufweist, wobei der Rechner (1, 17) mit den Mitteln (4, 5, 6, 21, 22, 23) zur Blickrichtungserkennung und mit den Mitteln (3, 15, 19, 20) zur optischen und/oder akustischen Darstellung verbunden ist:, wobei der Rechner (1, 17) von den Mitteln zur Blickrichtungserkennung die. Blickrichtung des Fahrers des Fahrzeugs erhält, wobei der Rechner (1, 17) den Mitteln (3, 15, 19, 20) zur optischen und/oder akustischen Darstellung die Blickrichtung des Fahrers des Fahrzeugs übermittelt, so dass damit die Mittel (3, 15, 19, 20) zur optischen und/oder akustischen Darstellung die Informationen in Abhängigkeit von der Blickrichtung des Fahrers des Fahrzeugs darstellen, **dadurch gekennzeichnet, dass** die Mittel (3, 15, 19, 20) zur optischen und/oder akustischen Darstellung einen Projektor aufweisen, der Informationen auf die Windschutzscheibe projiziert, und dass die Vorrichtung die Blickrichtung und/oder Spracheingaben des Fahrers zur Auswahl von Funktionen verwendet.

2. Vorrichtung nach Anspruch 1, **dadurch gekennzeichnet, dass** die Mittel (3, 15, 19, 20) zur optischen und/oder akusti-schen Darstellung einen Projektor aufweisen, der Informationen auf die Netzhaut des Fahrers projiziert.

3. Vorrichtung nach Anspruch 1, **dadurch gekennzeichnet, dass** die Mittel (3, 15, 19, 20) zur optischen oder akustischen Darstellung eine zweidimensionale und/oder dreidimensionale Darstellung erlauben.

4. Vorrichtung nach den Ansprüchen 2 und 3 **dadurch gekennzeichnet, dass** die Vorrichtung Kombinationen von unterschiedlichen Mitteln (3, 20) zur optischen Darstellung aufweist.

5. Vorrichtung nach Anspruch 2, 3, oder 4, **dadurch gekennzeichnet, dass** die Vorrichtung als Datenquelle ein Navigationsgerät (13, 31) aufweist, das mit dem Rechner (1, 17) verbunden ist, um Daten für die Darstellung mittels der Mittel (3, 15, 19, 20) zur optischen und/oder akustischen Darstellung zu liefern.

6. Vorrichtung nach Anspruch 2, 3, oder 4, **dadurch gekennzeichnet, dass** die Vorrichtung als Datenquelle eine Kamera (10, 27) aufweist, die mit dem Rechner (1, 17) verbunden ist, um Aufnahmen einer Szene hinter dem Fahrzeug für die Darstellung mittels der Mittel (3, 15, 19, 20) zur optischen und/oder akustischen Darstellung zu liefern.

7. Vorrichtung nach Anspruch 2, 3, oder 4, **dadurch gekennzeichnet, dass** die Vorrichtung als Datenquelle einen Speicher (12, 29) aufweist, der mit dem Rechner (1, 17) verbunden ist, dass der Speicher (12, 29) eine Bedienungsanleitung, eine Benutzerführung und eine Hilfefunktion für im Fahrzeug befindliche Geräte aufweist.

8. Vorrichtung nach einem der vorhergehenden Ansprüche, **dadurch gekennzeichnet, dass** die Mittel (4, 5, 6, 21, 22, 23) zur Blickrichtungserkennung des Fahrers Infrarotdioden aufweisen, die das Auge des Fahrers beleuchten, und dass die Mittel (4, 5, 6, 21, 22, 23) zur Blickrichtungserkennung eine Kamera aufweisen, die am Auge des Fahrers reflektiertes Licht der Infrarotdioden empfängt.

9. Vorrichtung nach einem der vorhergehenden Ansprüche, **dadurch gekennzeichnet, dass** die Vorrichtung: mit einer Sende/Empfangsstation (7, 24) als Datenquelle verbunden ist, um Daten zu empfangen und abzurufen.

10. Vorrichtung nach einem der vorhergehenden Ansprüche, **dadurch gekennzeichnet, dass** die Vorrichtung mit einer Empfangsstation (8, 25) als Datenquelle verbunden ist, um Daten zu empfangen.

11. Vorrichtung nach einem der vorhergehenden Ansprüche, **dadurch gekennzeichnet, dass** die Vorrichtung mit Fahrzeugsensoren (14, 30) als Datenquelle verbunden ist, so dass die Mittel (3, 15, 19, 20) zur optischen und/oder akustischen Darstellung Meldungen über den Zustand des Fahrzeugs darstellen.

12. Vorrichtung nach einem der vorhergehenden Ansprüche, **dadurch gekennzeichnet, dass** die Vorrichtung mit einer Aktorik (32, 33) verbunden ist, die die Rückspiegel und die Kopfstützenhöhe des Fahrers steuert.

13. Vorrichtung nach einem der vorhergehenden Ansprüche, **dadurch gekennzeichnet, dass** der Rechner (17) mit anderen Komponenten der Vorrichtung und mit der Vorrichtung verbundenen Komponenten über einen Bus (16) verbunden ist.

## Claims

1. Device for representing information in a vehicle, the device having means (3, 15, 19, 20) for visual and/or audible representation, the means (3, 15, 19, 20) for visual and/or audible representation representing the information, various data sources making the information available, the device having means (4, 5, 6, 21, 22, 23) for detecting the viewing direction of a driver of the vehicle, the means (4, 5, 6, 21, 22, 23) for detecting the viewing direction detecting the viewing direction of the driver, the device having a computer (1, 17), the computer (1, 17) being connected to the means (4, 5, 6, 21, 22, 23) for detecting the viewing direction and to the means (3, 15, 19, 20) for visual and/or audible representation, the computer (1, 17) receiving the viewing direction of the driver of the vehicle from the means for detecting the viewing direction, the computer (1, 17) communicating the viewing direction of the driver of the vehicle to the means (3, 15, 19, 20) for visual and/or audible representation, so that in this way the means (3, 15, 19, 20) for visual and/or audible representation represent the information as a function of the viewing direction of the driver of the vehicle, **characterized in that** the means (3, 15, 19, 20) for visual and/or audible representation have a projector which projects information onto the windscreen, and **in that** the device uses the viewing direction and/or voice inputs of the driver for selecting functions.

2. Device according to Claim 1, **characterized in that** the means (3, 15, 19, 20) for visual and/or audible representation have a projector which projects information onto the retina of the driver.

3. Device according to Claim 1, **characterized in that** the means (3, 15, 19, 20) for visual or audible representation permit two-dimensional and/or three-dimensional representation.

4. Device according to Claims 2 and 3, **characterized in that** the device has combinations of different means (3, 20) for visual representation.

5. Device according to Claim 2, 3 or 4, **characterized in that** the device has, as data source, a navigation unit (13, 31) which is connected to the computer (1, 17) in order to supply data for the representation using the means (3, 15, 19, 20) for visual and/or audible representation.

6. Device according to Claims 2, 3 or 4, **characterized in that** the device has, as data source, a video camera (10, 27) which is connected to the computer (1, 17) in order to supply recordings of a scene behind the vehicle to be represented using the means (3, 15, 19, 20) for visual and/or audible representation.

7. Device according to Claim 2, 3 or 4, **characterized in that** the device has, as data source, a memory (12, 29) which is connected to the computer (1, 17), **in that** the memory (12, 29) has operating instructions, a user guide and a help function for devices located in the vehicle.

8. Device according to one of the preceding claims, **characterized in that** the means (4, 5, 6, 21, 22, 23) for detecting the viewing direction of the driver have infrared diodes which illuminate the driver's eye, and **in that** the means (4, 5, 6, 21, 22, 23) for detecting the viewing direction have a video camera which receives light from the infrared diodes which is reflected at the driver's eye.

9. Device according to one of the preceding claims, **characterized in that** the device is connected to a transmitter/receiver station (7, 24) as data source in order to receive and call data.

10. Device according to one of the preceding claims, **characterized in that** the device is connected to a receiver station (8, 25) as data source in order to receive data.

11. Device according to one of the preceding claims, **characterized in that** the device is connected to vehicle sensors (14, 30) as data source so that the means (3, 15, 19, 20) for visual and/or audible representation form messages relating to the state of the vehicle.

12. Device according to one of the preceding claims, **characterized in that** the device is connected to an actuator system (32, 33) which controls the rear-view mirrors and the height of the driver's headrest.

13. Device according to one of the preceding claims, **characterized in that** the computer (17) is connected via a bus (16) to other components of the device and components which are connected to the device.

## Revendications

1. Dispositif de présentation d'informations dans un véhicule, ce dispositif comportant des moyens (3, 15, 19, 20) pour une présentation optique et/ou acoustique, les moyens (3, 15, 19, 20) de présentation optique et/ou acoustique représentant les informations provenant de différentes sources de données, dans lequel des moyens (4, 5, 6, 21, 22, 23) détectent la direction du regard du conducteur du véhicule, et ces moyens (4, 5, 6, 21, 22, 23) de reconnaissance de la direction du regard du conducteur reconnaissent cette direction, le dispositif comporte un calculateur (1, 17) relié aux moyens (4, 5, 6, 21, 22, 23) pour détecter la direction du regard et aux moyens (3, 15, 19, 20) pour la représentation optique et/ou acoustique, le calculateur reçoit des moyens de détection de la direction de vue, la direction du regard du conducteur du. véhicule, et transmet aux moyens (3, 15, 19, 20) de représentation optique et/ou acoustique la direction du regard du conducteur du véhicule, pour qu'ainsi les moyens (3, 15, 19, 20) de représentation optique et/ou acoustique puissent représenter les informations en fonction de la direction du regard du conducteur du véhicule,
**caractérisé en ce que**
les moyens (3, 15, 19, 20) de représentation optique et/ou acoustique comportent un projecteur qui projette les informations sur le pare-brise et le dispositif utilise la direction du regard et/ou les entrées vocales du conducteur pour la sélection des fonctions.

2. Dispositif selon la revendication 1,
**caractérisé en ce que**
les moyens (3, 15, 19, 20) de représentation optique et/ou acoustique comportent un projecteur qui projette les informations sur le fond de l'oeil du conducteur.

3. Dispositif selon la revendication 1,
**caractérisé en ce que**
les moyens (3, 15, 19, 20) de représentation optique et/ou acoustique permettent une représentation bidimensionnelle et/ou tridimensionnelle.

4. Dispositif selon l'une quelconque des revendications 2 et 3,
**caractérisé en ce que**
le dispositif comporte des combinaisons de moyens différents (3, 20) pour la représentation optique.

5. Dispositif selon l'une quelconque des revendications 2, 3 ou 4,
**caractérisé en ce qu'**
il comporte comme source de données, un appareil de navigation (13, 31) relié au calculateur (1, 17) pour fournir des données de représentation à l'aide des moyens (3, 15, 19, 20) pour la représentation optique et/ou acoustique.

6. Dispositif selon l'une quelconque des revendications 2, 3 ou 4,
**caractérisé en ce qu'**
il comporte comme source de données une caméra (10, 27) reliée au calculateur (1, 17) pour prendre une scène derrière le véhicule pour la représenter à l'aide des moyens (3, 15, 19, 20) pour la représentation optique et/ou acoustique.

7. Dispositif selon l'une quelconque des revendications 2, 3 ou 4,
**caractérisé en ce que**
le dispositif comporte comme source de données, une mémoire (12, 29) reliée au calculateur (1, 17) de façon que la mémoire (12, 29) présente une indication de service, une conduite d'utilisateur et une fonction d'aide pour les appareils du véhicule.

8. Dispositif selon l'une quelconque des revendications précédentes,
**caractérisé en ce que**
les moyens (4, 5, 6, 21, 22, 23) de détection de la direction du regard du conducteur ont des diodes à infrarouge qui éclairent l'oeil du conducteur et les moyens (4, 5, 6, 21, 22, 23) de détection de la direction du regard ont une caméra qui reçoit la lumière des diodes à infrarouge réfléchie par l'oeil du conducteur.

9. Dispositif selon l'une quelconque des revendications précédentes,
**caractérisé en ce que**
le dispositif est relié à un poste émission/réception (7, 24) comme source de données pour recevoir des données et les appeler.

10. Dispositif selon l'une quelconque des revendications précédentes,
**caractérisé en ce que**
le dispositif est relié à un poste de réception (8, 25) comme source de données pour recevoir des données.

11. Dispositif selon l'une quelconque des revendications précédentes,
**caractérisé en ce que**
le dispositif est relié à des capteurs du véhicule (14, 30) comme sources de données de sorte que les moyens (3, 15, 19, 20) de représentation optique et/ou acoustique présentent des informations concernant l'état du véhicule.

12. Dispositif selon l'une quelconque des revendications précédentes,
**caractérisé en ce que**
le dispositif est relié à des actionneurs (32, 33) qui commandent le rétroviseur et la hauteur de l'appui-tête du conducteur.

13. Dispositif selon l'une quelconque des revendications précédentes,
**caractérisé en ce que**
le calculateur (17) est relié à d'autres composants du dispositif et des composants reliés au dispositif par l'intermédiaire d'un bus (16).
